# EUROPÄISCHE PATENTSCHRIFT

(11) **EP 0 289 530 B1**
(45) Veröffentlichungstag und Bekanntmachung des Hinweises auf die Patenterteilung: **05.05.1993**
(21) Anmeldenummer: 87906423.6
(22) Anmeldetag: 06.10.1987
(51) Int. Cl.: B60D 1/00

(54) **ANHÄNGEZUGVORRICHTUNG**
TRAILER TRACTION DEVICE
DISPOSITF DE TRACTION DE REMORQUE

(30) Priorität: 09.10.1986 DE 3634385
(43) Veröffentlichungstag der Anmeldung: 09.11.1988
(73) Patentinhaber: Jürgens, Walter, Dr. Ing., D-52072 Aachen (DE)
(72) Erfinder: Jürgens, Walter, Dr. Ing., D-52072 Aachen (DE)
(86) Internationale Anmeldenummer: EP8700573
(87) Internationale Veröffentlichungsnummer: WO8803096

(56) Entgegenhaltungen:
- EP-A- 0 160 934
- EP-A- 0 231 551

## Beschreibung

In der Anmeldung EP-A-0160934, die der DE-A-3416631, der DE-A-3419392 und der DE-A-4321174 entspricht und die Merkmale des Oberbegriffs des Anspruchs 1 offenbart, wurde eine trennbare Anhängerkupplung für Kraftfahrzeuge dargestellt, die garantiert, daß der trennbare Teil, nämlich die abnehmbare Kugelstange entweder fest eingerastet und gesichert ist, oder aber herausfällt. Das Fixierelement und die Sperre desselben saßen im festen Teil. Die Kugelstange hatte mittig eine Ausnehmung in die das Fixierelement nach Lösen der Sperre einrastet. Diese Lösung hat insbesondere den Nachteil, daß man aus Unfallgründen eine Fangvorrichtung beim Lösen des abnehmbaren Teiles braucht.

Der zweite Anspruch der Anmeldung EP-A-0160934 sieht vor, daß der abnehmbare Teil den Fixierbolzen mit dem Betätigungshebel aufweist und der feste Teile eine Ausnehmung in die der Fixierbolzen einrastet. Beim Lösen des abnehmbaren Teiles ist es notwendig denselben anzufassen, so daß die Unfallgefahr durch unkontrollierte Handhabung eliminiert ist.

Diese Lösung soll zur folgenden weiteren Darstellung bevorzugt werden. In der EP-A-0160934 hat Anspruch 1 jegliche Art von Sperre impliziert. Die auf dem Markt befindlichen Ausführungen aber sehen separate Sperren vor, die in den Fixierbolzen eingreifen. Diese Art ist wirtschaftlich aufwendig.

Der Erfinder hat es sich zur Aufgabe gemacht diesen Nachteil zu eliminieren. Diese Aufgabe wird durch die Merkmale des kennzeichnenden Teils des Anspruchs 1 gelöst. Insbesondere wird vorgeschlagen, die Sperre als quer zum Fixierbolzen stehendes Element auszubilden, direkt fest mit dem Fixierbolzen, oder als quer stehendes Sperrelement in einer um die Längsachse des Fixierbolzens festen oder drehbaren Büchse und daß dieses Element sich im gespannten Zustand des Fixierbolzens durch Rotation in der Endstellung am Gehäuse abstützt. Dies kann an der äußeren Kontur aber auch über eine Führung geschehen. Zudem kann diese Sperre, die durch einen Längsschlitz führt, als Kraftangriffspunkt für den Öffnungsschlüssel (-mechanismus) dienen. Diese Anordnung hat zudem noch den Vorteil, daß beim Öffnen durch den Schlüssel eine weitere Kraft auf die Sperre ausgeübt wird. Diese drückt gegen das Kontaktelement als Auslöseelement des Gegenstückes in dem beschriebenen Fall des festen Teiles, und drückt so die Kugelstange aus ihrer Halterung. Durch einen Sperrbolzen wird der Fixierbolzen in eingerasteter Stellung vor dem Zurückgleiten geschützt.

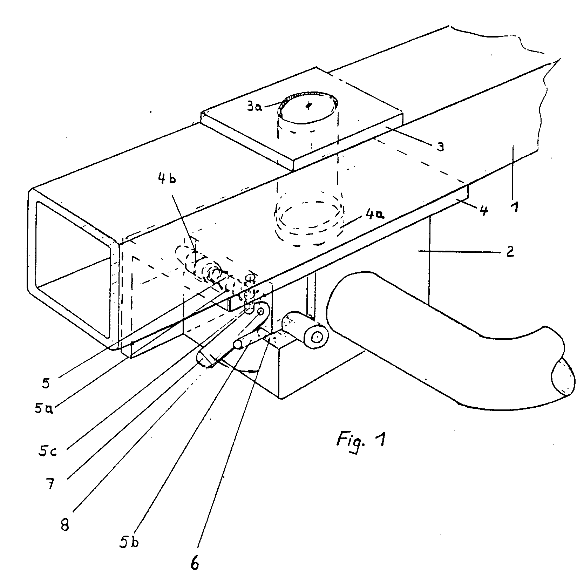

Abb. 1 zeigt das Querrohr 1 als festes Teil und die abnehmbare Kugelstange 2 als abnehmbares Teil. Das abnehmbare Teil wird in die mit Bohrungen 3a u. 4a versehenen Aufnahmen 3 u. 4 eingeschoben.

Die Aufnahme 4 hat eine weitere Ausnehmung z. B. Bohrung 4b, die konisch ausgeführt sein kann, in die der Fixierbolzen 5 durch eine Feder 5a beim Zusammenfügen des festen und losen Teiles einrastet.

Der Fixierbolzen 5 hat eine quer zu ihm angeordnete Sperre 5b, die direkt an demselben befestigt ist (wobei unter direkt auch z. B. über eine Buchse die auf denselben aufgeschoben ist, verstanden wird).

Diese Sperre führt in einen Längsschlitz 6 der Kugelstange 2.

Der Schlüssel 7 dreht sich um den Punkt 8 und drückt beim Öffnen gegen die Sperre 5b. Diese gleitet durch den Längsschlitz 6 und dreht sich beim Verlassen desselben nach oben gegen das Gehäuse der Kugelstange 2 und wird gehalten. (Der Schlitz kann auch so ausgebildet sein, daß er nach oben abschwenkt im ca. 90° Winkel).

Im gespannten Zustand des Fixierelementes wird beim Einschieben des losen Teiles in das feste die Sperre 5b durch das Kontaktelement 5c am festen Teil zurückgedrückt, so daß die Sperre deckungsgleich mit dem Längsschlitz 6 kommt und der Fixierbolzen 5 ungehindert einrasten kann. Das Kontaktelement 5c ist verstellbar ausgeführt (z. B. Stift mit Gewinde), so daß das Auslösen des Fixierbolzens dann erfolgt, wenn derselbe mit Sicherheit in die Bohrung 4b einrasten kann. Die konische Bohrung 4b ist etwas größer ausgeführt, so daß bei geeigneter Auslösestellung auf Grund der Schräge des Fixierbolzens das lose Teil immer fest gegen das feste Teil gezogen wird.

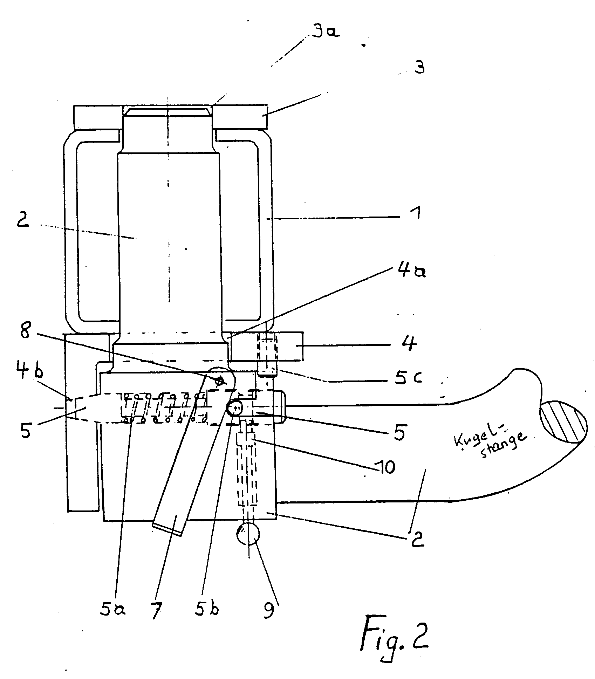

Abb. 2 zeigt die Seitenansicht der Anordnung. Das lose Teil 2 ist durch den Fixierbolzen 5 im festen Teil 1 (4) (3) verankert. Durch den Schlüssel 7 wird beim Ziehen in Richtung Kupplungskugel, nachdem der Sperrbolzen 9 gezogen wurde, der in der Nut 10 des Fixierbolzens sitzt, die Sperre 5b durch den Längsschlitz 6 gedrückt, sobald der Längsschlitz aufhört wird die Sperre 5b nach oben gegen das Kontaktelement 5c gedrückt und so die Kugelstange aus dem festen Teil bewegt.

## Patentansprüche

1. Trennbare Anhängerkupplung für Kraftfahrzeuge, bestehend aus einem am Kraftfahrzeug befestigten Grundkörper (1) als festes Teil und einer vom Grundkörper (1) trennbaren Kugelstange(2) als loses Teil, wobei diese Teile (1, 2) durch einen Fixierbolzen (5) miteinander verbindbar sind, der an einem dieser Teile axial bewegbar angeordnet ist und in eine Ausnehmung (4b) des anderen Teils einrastet und der Fixierbolzen (5) in Einrastrichtung federbelastet ist und bei getrennter Anhängerkupplung durch eine Sperre (5b) gegen die Kraft einer Feder in einem gespannten Zustand gehalten wird, dadurch gekennzeichnet, daß der Fixierbolzen (5), um seine Längsachse drehbar ausgebildet, mit einem Sperrelement (5b) in der Weise versehen ist, daß dieses Sperrelement (5b) direkt mit dem Fixierbolzen fest verbunden ist, z. B. fest verschraubt oder aber an einer auf dem Bolzen festen oder drehbaren Buchse gehalten ist, und daß bei einer Drehbewegung des Fixierbolzens (5) oder der mit dem Sperrelement (5b) auf dem Fixierbolzen (5) sitzende Buchse am Ende des Spannvorganges, wenn das Sperrelement (5b) sich am Ende eines Schlitzes (6), der in Ein- und Ausrastrichtung verläuft, befindet, der Fixierbolzen (5) gegen die Kraft der Feder (5a) im gespannten Zustand gehalten wird.

2. Trennbare Anhängerkupplung nach Anspruch 1, dadurch gekennzeichnet, daß der Fixierbolzenmechanismus im abnehmbaren Teil sitzt

3. Trennbare Anhängerkupplung nach Anspruch 1 , dadurch gekennzeichnet, daß der Fixierbolzenmechanismus im festen Teil sitzt.

4. Trennbare Anhängerkupplung nach Anspruch 1-3, dadurch gekennzeichnet, daß das Sperrelement (5b) gleichzeitig Kraftangriffspunkt für den um einen Drehpunkt (8) gelagerten Öffnungsschlüssel (7) ist.

5. Trennbare Anhängerkupplung nach Anspruch 1-4, dadurch gekennzeichnet, daß die Rotation auf Grund der Geometrie des Schlitzes (6) bewirkt ist.

6. Trennbare Anhängerkupplung nach Anspruch 1-5, dadurch gekennzeichnet, daß durch die Geometrie des Schlüssels das Sperrelement (5b) gegen ein Kontaktelement (5c) eines Gegenstücks (4) gepreßt wird und so die Kugelstange (2) aus dem festen Teil (1) geschoben wird.

7. Trennbare Anhängerkupplung nach Anspruch 1-6, dadurch gekennzeichnet, daß der Fixierbolzen (5) in eingedrücktem Zustand durch eine Sperre (9) am Zurückgleiten gehindert wird.

## Claims

1. Detachable towing hook assembly for cars composed by a to the car fixed carrier (1) a fixed part and a from this carrier detachable hook part (2) as a loose part in doing so these parts (1 + 2) are combinable by a pin (5) which is axialy movable and engages (jumps) in a output (4b) of the other part and the pin (5) has a spring preasure working in the direction of the engagement (jumping in) and for the seperated towel hook assembly is kept by a click (5b) against the resilience of a spring in a tightened position caracterised in that pin (5) is constructed turnable around a longitudinal axis with a click (5b) provided in that manner, that the click (5b) is directly combined with the pin (5), for example fixed screwed or hold at a bush turning around the stam of the pin (5) or of the bush with the click (5b) sitting on the pin (5) at the end of the tension movement.
When the click (5b) is at the end of the slit (6) which has the direction of the movement of the entering and treading out of the pin (5), the pin (5) is hold in tightened position against the resilience of the spring (5).

2. Detachable towing hook assembly according to claim 1 characterized in the atachable part (2) (the hook part) is provided with the fixing pin (5) mechanism.

3. Detachable towing hook assembly according to claim 1 characterized in that the pin (5) machanism is in the fixed part in the carrier (1)

4. Detachable towing hook assembly according to claim 1-3 characterized in that the pin click (5b) is also the working point of the opening key working around the centre of rotation (8).

5. Detachable towing hook assembly according to claim 1-4 characterized in that the rotation is caused by the geometric of the slit (6).

6. Detachable towing hook assembly according to claim 1-5 characterized in that by the geometric of the key (7) the click (5b) is pressed against a contact element (5c) of a counter part (4) and so the hook part (2) is pushed out of the fixed part (1) (the carrier).

7. Detachable towing hook assembly according to claim 1-6 characterized in that the fixing pin (5) is prevented to move back by a blocking click (9), after pin (5) has entered the cut out (4b).

## Revendications

1. Crochet de remorque séparable pour véhicule moteurs, se composant d'un matériel de base(1) attaché au véhicule moteur comme part fixe et d'un crochet de remorque séparable(2) du matériel de base(1) comme part détachée. Les parts (1) et (2) sont attachable au moyen d'un boulon d'attachement(5), qui est placé axialement mouvable à l'un de ces parts et qui entre dans une exception(4b) de l'autre part et le boulon d'attachement(5) est chargé de resort dans la direction d'entrer et qui en état de crochet de remorque séparé est tenue en élasticité au moyen d'un élément blocus(5b) contre la force d'un resort, caractérisé de cette manière que le boulon d'attachement(5), construit giratoire au tour de son axe longitudinale, muni d'un élément blocus(5b) de cette manière que cet élément blocus(5b) est directement lier fixement avec le boulon d'attachement(5), par exemple visser ou bien tenu par une douille fixe ou giratoire sur le boulon et qu'avec mouvement giratoire du boulon d'attachement(5) ou de la douille, qui est placé avec l'élément blocus(5b) sur le boulon d'attachement(5) à la fin du mouvement de tension, quand l'élément blocus(5b) se trouve à la fin d'une fente(6), qui se trouve en direction d'entrer et quitter, le boulon d'attachement(5) est tenue en tension contre la force du resort(5a).

2. Crochet de remorque séparable selon prétention 1, caractérisé de cette manière que la mécanique du boulon d'attachement se trouve dans la part séparable.

3. Crochet de remorque séparable selon prétention 1-2, caractérise de cette manière, que la mécanique du boulon d'attachement se trouve dans la part fixe.

4. Crochet de remorque séparable selon prétention 1-3, caractérisé de cette manière que l'élément blocus(5b) est en mème temps point d'attaque-force pour la clé d'ouverture(7) placée au tour d'un point giratoire(8).

5. Crochet de remorque séparable selon prétention 1-4, caractérisé de cette manière que la rotation est effectuée à cause de la géométrie de la fente(6),

6. Crochet de remorque séparable selon prétention 1-5, caractérisé de cette manière qu'à cause de la géométrie de la clé l'élément blocus(5b) est pressé contre un élément de contact(5c) d'une contrepart(4) et que de cette manière le crochet de remorque(2) est poussé hors de la part fixe(1).

7. Crochet de remorque séparable selon prétention 1-7, caractérisé de cette manière que le boulon d'attachement(5) est, en état poussé, empêché de glisser en arrière au moyen d'un blocus(9).
